# EUROPÄISCHE PATENTSCHRIFT

(11) **EP 4 041 485 B1**
(45) Veröffentlichungstag und Bekanntmachung des Hinweises auf die Patenterteilung: **30.10.2024**
(21) Anmeldenummer: 20786238.4
(22) Anmeldetag: 30.09.2020
(51) Int. Cl.: B23K 9/04, B23K 9/173, B23K 9/29, B23K 9/32

(54) **VERFAHREN ZUM AUFTRAGSSCHWEISSEN VON PULVERFÖRMIGEM ODER DRAHTFÖRMIGEM MATERIAL AUF EIN WERKSTÜCK**
PROCESS OF BUILD-UP WELDING OF POWDER OR WIRE MATERIAL ON A WORKPIECE
PROCÉDÉ DE RECHARGEMENT PAR SOUDAGE DE MATÉRIAU SOUS FORME DE POUDRE OU DE FIL SUR UNE PIÈCE

(30) Priorität: 07.10.2019 AT 508512019
(43) Veröffentlichungstag der Anmeldung: 17.08.2022
(73) Patentinhaber: TECHNISCHE UNIVERSITÄT WIEN, 1040 Wien (AT)
(72) Erfinder: HAYDEN, Paul, 1160 Wien (AT); LAIMER, Johann, 2500 Baden (AT)
(74) Vertreter: Gruber, Philipp
(86) Internationale Anmeldenummer: PCT/AT2020/060348
(87) Internationale Veröffentlichungsnummer: WO 2021/068013

(56) Entgegenhaltungen:
- DE-A1- 102006 021 727
- DE-A1- 3 426 410
- KR-A- 20160 055 329
- US-A- 4 527 039
- US-A1- 2018 326 525

## Beschreibung

Die vorliegende Erfindung betrifft ein Verfahren zum Auftragsschweißen von pulverförmigem oder drahtförmigem Material auf ein Werkstück, welches bevorzugt ein ebenes Substrat ist, mittels einer Vorrichtung, die eine im Wesentlichen stabförmige Elektrode umfasst, wobei die Elektrode zumindest einen in ihrem Inneren verlaufenden Materialzuführungskanal zum Zuführen des pulverförmigen oder drahtförmigen Materials in den Lichtbogen aufweist (siehe z.B. US 4 527 039 A).

Im Bereich des Auftragsschweißens ist das Verfahren des Lichtbogenschweißens zum Aufbringen von Material auf eine zu bearbeitende Oberfläche seit geraumer Zeit bekannt. Lichtbogenschweißen ist ein Verfahren, welches das örtlich begrenzte Verflüssigen von Metallen umfasst. Dabei wird ein Lichtbogen zwischen dem Werkstück und einer stromführenden Elektrode gezündet und durch den Strom, der durch Elektrode, Lichtbogen und Werkstück fließt, aufrecht erhalten. Da die Eigenschaften des Lichtbogens und der Metallschmelze abhängig von der Atmosphäre sind, werden zum Vermeiden von Oxidationen spezialisierte Gase, meistens Argon, aber auch beispielsweise CO₂ zum kontrollierten Einbringen von Kohlenstoff um die Metallschmelze geblasen, sodass das Schweißen in kontrollierter Atmosphäre stattfinden kann.

Auftragsschweißen führt dem Lichtbogen frisches Material zu, welches verflüssigt und auf die zu schweißende Oberfläche aufgetragen wird. Dieses Material wird meist als Metalldraht oder Pulver seitlich in den Lichtbogen eingebracht. Eine spezielle Form des Auftragsschweißen ist das MIG/MAG-Verfahren, wobei Material als Draht-Elektrode zugeführt und im Lichtbogen geschmolzen und damit aufgetragen wird. Der stromführende Draht bildet in diesem Fall die Elektrode, sodass der Lichtbogen zwischen Draht und Werkstück ausgebildet ist.

Im Bereich des Präzisionsauftragschweißens ist das Cold Metal Transfer (CMT)-Verfahren von Fronius bekannt. Dabei handelt es sich um eine Abwandlung des MIG/MAG-Verfahrens, welches einen Schweißdraht als stromführende Elektrode der Schweißregion zuführt, wo er durch die Hitze eines Lichtbogens zwischen Schweißdraht und Schweißregion schmilzt. Im CMT Verfahren wird dieser Draht nicht konstant zugeführt, sondern abhängig von Stromfluss zugeführt und wieder zurückgezogen, wodurch Tropfen des verflüssigten Materials genau in der Schweißregion deponiert werden können.

Ferner ist Wolfram-Inert-Gas (WIG)-Schweißen bekannt, das ein häufig gewählter Prozess ist, bei dem eine stromführende Wolframelektrode spitz angeschliffen ist und um die Elektrode kontinuierlich Argon gespült wird. Bei diesem Verfahren wird ein Draht seitlich in den Lichtbogen eingebracht.

Eine Abwandlung des Lichtbogenschweißens ist das Plasmaschweißen. Dabei wird der Lichtbogen durch eine Düse gezwungen, um seine geometrischen und thermischen Eigenschaften besser zu kontrollieren. Die Elektrode befindet sich axial zentriert hinter der Düse. Häufig ist die Düse, welche oft aus Kupfer gefertigt ist, selbst leitend, um einen Primär-Lichtbogen zwischen Elektrode und Düse zünden zu können. Hat der Primär-Lichtbogen das Werkstück erreicht, kann der Stromfluss zur Düse gekappt und stattdessen der Lichtbogen zwischen Elektrode und Werkstück betrieben werden.

Plasmaauftragsschweißen kann wie Lichtbogenauftragsschweißen durch seitliches Zuführen von Material erfolgen, da Plasmaauftragsschweißen aber viel höhere Temperaturen als Lichtbogenauftragsschweißen erlaubt, sind auch andere Materialverflüssigungsarten möglich.

Bei einer dieser Verflüssigungsarten, dem Plasmaspritzen, wird ein Primär-Lichtbogen zwischen Elektrode und Düse durch günstige Systemparameter möglichst ausgedehnt gehalten. Dies kann durch eine längere Düse sowie durch Arbeiten in Unterdruckkammern realisiert werden. In die lange Plasmaflamme wird Pulver eingebracht, welches mit dem heißen Gas transportiert und beschleunigt wird. Das Pulver tritt geschmolzen und mit hoher Geschwindigkeit aus der Plasmaflamme aus und trifft auf eine zu behandelnde Oberfläche auf. Dort erstarren die Flüssigkeitströpfchen schlagartig. Da die Tröpfchen zwar sehr heiß sind, selbst aber geringe Wärmekapazität aufweisen, ist die auf dem Werkstück deponierte thermische Leistung gering. Hierbei ist die Qualität der aufgespritzten Oberfläche maßgeblich durch die Zeit, die das Pulver in der Plasmaflamme verbringt, bestimmt. Daher ist die Länge der Plasmaflamme einer der zu maximierenden Parameter.

Die Schrift US 2012193329 A1 offenbart ein Pulver-Mikrofunken-Abscheidungssystem, welches eine Elektrode und einen Pulverzuführungskanal, der innerhalb der Elektrode oder zumindest teilweise um diese herum konfiguriert ist, aufweist, um Pulver, das elektrisch leitendes Material umfasst, in einen Spalt zwischen der Elektrode und dem Substrat zu leiten.

Darüber hinaus offenbart die Schrift EP 264243 A2 ein Verfahren, welches das Pulver-Mikrofunken-System aus der US 2012193329 A1 zum Reparieren eines metallischen Gegenstands verwendet.

Auch die Schrift US 2014008330 A1 zeigt ein Verfahren zum Reparieren einer Komponente, bei dem eine Elektrode über einem Defekt oder einer Beschädigung positioniert wird. Ein erstes Metallpulver und ein zweites Metallpulver können hierbei in einen Entladungsspalt zwischen der Elektrode und der Komponente eingespeist werden, um eine Hybridmetallbeschichtung zu bilden.

Das Dokument DE 3110628 A1 offenbart ein Verfahren zur Herstellung legierter Oberflächen auf Rohren, wobei Legierungsmaterial durch eine hohl ausgebildete Elektrode in einen Lichtbogen eingebracht wird.

Zwar ist bekannt, dass durch die axiale Pulverzufuhr die Oberflächenqualität prinzipiell steigt, jedoch weisen diese Verfahren in der Praxis Materialanlagerungen an der die Elektrode umgebenden Düse auf, welche in Folge durch die Materialanlagerungen zunehmend verstopft wird. Die Vorrichtung zum Auftragsschweißen kann dann einerseits, sofern ein Kontakt zwischen der Düse und der Elektrode durch angelagertes Material hergestellt ist, dauerhaft unbrauchbar werden und muss ausgetauscht werden, was hohe Kosten verursacht. Andererseits ist selbst bei einer Nichtkontaktierung der Elektrode und der Düse durch angelagertes Material über einen längeren Zeitraum nicht nur die Verbesserung der Oberflächenqualität durch die Verstopfung de facto verhindert, sondern es muss sogar noch zusätzlich die Vorrichtung zum Auftragsschweißen vom auf der Düse aufgetragenen Material befreit werden, was aufwändige sowie zeitintensive Wartungsarbeiten nach sich zieht. Des Weiteren fallen durch den Ausfall der Schweißvorrichtung in der Produktion große Kosten durch den Produktionsstillstand an. Des Weiteren weisen diese Verfahren durch die Verstopfung der Düse eine verringerte Präzision beim Aufbringen des Materials auf die zu bearbeitende Oberfläche auf, da das an der Düse angesammelte Material das Spülen eines Arbeitsgases um die Elektrode erschwert.

Die Aufgabe der Erfindung besteht daher darin, ein Verfahren zur Verfügung zu stellen, das die Nachteile des Standes der Technik vermeidet und durch gewonnene Präzision neue Fertigungsmethoden eröffnet. Diese Aufgabe wird durch Bereitstellen eines Verfahrens zum Auftragsschweißen von pulverförmigem oder drahtförmigem Material mit den Merkmalen von Anspruch 1 gelöst.

Bei dem erfindungsgemäßen Verfahren umfasst die Vorrichtung eine die Elektrode umgebende Düse sowie einen Arbeitsgasbereich, welcher zwischen der Elektrode und der Düse ausgebildet ist, wobei das Verfahren folgende Schritte umfasst:
- Ausbilden des Lichtbogens als übertragener Lichtbogen zwischen der Elektrode und dem Werkstück oder als freistehender Lichtbogen zwischen der Elektrode und der Düse,
- Durchfluten des Arbeitsgasbereichs mit einem Arbeitsgas, um den Lichtbogen in Richtung des Werkstücks einzuschnüren,
- Zuführen des pulverförmigen oder drahtförmigen Materials in den eingeschnürten Lichtbogen und
- Bewegen der Vorrichtung über das Werkstück, während das pulverförmige oder drahtförmige Material in den eingeschnürten Lichtbogen zugeführt wird.

Hierdurch wird erzielt, dass durch das Verhindern des Wanderns des Lichtbogens eine gerade Führung des Lichtbogens und in Folge das präzise Zuführen des Materials in seinem pulverförmigen oder drahtförmigen Zustand in den Lichtbogen, das Aufschmelzen des Materials im Lichtbogen sowie das präzise Zuführen des geschmolzenen Materials auf das Werkstück gewährleistet wird. Des Weiteren wird durch Verwenden einer kurzen Düse und präzise Kontrolle des Lichtbogens durch Einschnüren effektiv vermieden, dass sich Material in der Düse ansammelt, wodurch die Langlebigkeit der Vorrichtung gesteigert wird. Des Weiteren kann durch die Wahl der Fördermenge des Arbeitsgases die Form des Lichtbogens eingestellt werden. In Folge kann die Lichtbogenleistung und die Durchflussmenge des Gases dynamisch angepasst werden, um Präzision und Geschwindigkeit des Verfahrens zu optimieren.

Somit kann vorteilhafterweise um die Elektrode der Arbeitsgasbereich ausgebildet sein, in welchem das Arbeitsgas die Elektrode und den Lichtbogen umspült, um die Gaszusammensetzung um den Arbeitsbereich, welche wiederum die Lichtbogenleistung beeinflusst, zu kontrollieren. Weiter können chemische Reaktionen zwischen der Atmosphäre und dem flüssigen Metall stattfinden. Dies kann durch Umspülen mit Arbeitsgasen wie Argon oder Helium unterbunden werden, oder durch geeignete Aktivgase wie zum Beispiel CO₂ zur Materialoptimierung genutzt werden. Bei den Schritten des Ausbildens des Lichtbogens und des Durchflutens des Arbeitsgasbereichs ist es nicht relevant, welcher der beiden Schritte zuerst gestartet wird.

Erfindungsgemäß ist ein radialer Abstand zwischen der Düse und der Elektrode nicht größer als 1 cm und/oder ein axialer Abstand zwischen dem dem Werkstück zugewandten Ende der Düse und dem dem Werkstück zugewandten Ende der Elektrode nicht größer als 1 cm, wobei das dem Werkstück zugewandte Ende der Düse bevorzugt einen geringeren Abstand zum Werkstück aufweist als das dem Werkstück zugewandte Ende der Elektrode. Somit kann der Lichtbogen zwischen der Elektrode und der Düse, insbesondere durch die Auswahl eines bevorzugten Abstands zwischen Elektrode und Düse besonders einfach ausgebildet werden. Des Weiteren ermöglicht diese Ausführungsform der Düse das Zuführen von Arbeitsgas am Lichtbogen-Ansatz der Elektrode und bei geeigneter Fördermenge das Einschnüren des Lichtbogens in Richtung des Werkstücks. Der Bereich geeigneter Durchflussmenge hängt hierbei von der Geometrie der Düse, der Elektrode und des Werkstücks, sowie von der Lichtbogenleistung ab und kann somit zum Erreichen höchstmöglicher Präzision dynamisch angepasst werden. Die aus dem Stand der Technik für andere Schweißverfahren bekannten Düsen haben üblicherweise eine Länge, die länger ist als 10 cm, um einen besonders langen Lichtbogen auszubilden, was für das erfindungsgemäße Verfahren zum Auftragsschweißen jedoch nicht nötig ist.

Bevorzugt ist zwischen der Düse und einer die Düse umgebenden Atmosphärenschutzummantelung ein weiterer Arbeitsgasbereich ausgebildet, welcher vor Beginn des Auftragsschweißens mit einem weiteren Arbeitsgas durchflutet wird, sodass eine kontrollierte Atmosphäre auf einer Auftragsstelle des Werkstücks erzeugt wird. Somit kann vorteilhafterweise die Atmosphäre am Auftragungspunkt des zu bearbeitenden Werkstücks optimal kontrolliert werden. Die Gaszusammensetzung beeinflusst die Lichtbogenleistung und muss daher kontrolliert werden. Weiter können chemische Reaktionen zwischen der Atmosphäre und dem flüssigen Metall stattfinden. Dies kann durch Umspülen mit Arbeitsgasen wie Argon oder Helium unterbunden werden, oder durch geeignete Aktivgase wie zum Beispiel CO2 zur Materialoptimierung genutzt werden.

Alternativ wird die Vorrichtung in einer Kammer mit kontrollierter Atmosphäre verwendet. Dann muss kein Gas durch den ersten Gasstrom zugeführt werden. Eine Kammer kontrollierter Atmosphäre vermeidet Verwirbelungen, welche durch das Spülen von Gas um die Elektrode entstehen könnten, und erlaubt damit besonders präzises Arbeiten. Außerdem ermöglicht eine Kammer kontrollierter Atmosphäre einen größeren Abstand zwischen Elektrode und Werkstück ohne Präzisionsverluste durch Verwirbelungen, was längere Lichtbögen ermöglicht. Da längerer Abstand an sich aber die Präzision senkt, ist diese Ausführung besonders für das Oberflächenveredeln geeignet.

Bevorzugt wird das Verfahren zum Verbindungsschweißen eingesetzt wird, wobei dazu bevorzugt das pulverförmige oder drahtförmige Material ein Metall ist, oder das Verfahren wird zum Oberflächenveredeln eingesetzt, wobei dazu bevorzugt das pulverförmige oder drahtförmige Material ein Keramikpulver, ein Metall oder ein Karbidpulver ist. Besonders bevorzugt wird zum Oberflächenveredeln pulverförmiges Material eingesetzt. Das erfindungsgemäße Verfahren kann somit für zwei unterschiedliche Anwendungsgebiete eingesetzt werden, einerseits zum Verbindungsschweißen und andererseits zum Oberflächenveredeln. Für beide Anwendungszwecke kann dieselbe Vorrichtung verwendet werden, wobei jeweils ein unterschiedliches Material, Materialzuführrate und/oder Lichtbogenleistung ausgewählt werden kann.

Gemäß einer weiteren bevorzugten Ausführungsform wird das pulverförmige oder drahtförmige Material in einem zusätzlichen Arbeitsgas zugeführt, welches bevorzugt Argon, Helium, Kohlenstoffdioxid oder Stickstoff ist, wobei auch das Arbeitsgas und/oder das weitere Arbeitsgas bevorzugt Argon, Helium, Kohlenstoffdioxid oder Stickstoff ist/sind. Wenn gleiche Arbeitsgase verwendet werden, hat dies den Vorteil, dass auch die Atmosphäre am Werkstoff homogen bleibt. Unterschiedliche Gase eröffnen chemische Reaktionen, welche jedoch auch vorteilhaft für die Metallschmelze sein können. Das durch die Düse zugeführte Arbeitsgas kann somit ident mit dem der kontrollierten Atmosphäre um den Lichtbogen sein, oder aber sich davon unterscheiden, um gezielt chemische Reaktionen im Lichtbogen zu erzielen. Zum Beispiel kann H₂ im Lichtbogen mit einer CO₂-Atmosphäre reagieren, um dem flüssigen Metall Kohlenstoff zuzuführen.

Bevorzugt wird der Abstand zwischen Elektrode und Werkstück und/oder eine Position der Elektrode auf dem Werkstück durch eine mechanische Führung gesteuert. Einerseits können durch die Führung Strukturen auf dem Werkstück aufgebracht werden und andererseits kann der Abstand zum Werkstück jederzeit angepasst werden, um beispielsweise Unebenheiten des Werkstücks oder einer Neigung des Werkstücks Rechnung zu tragen, was durch eine manuelle Führung der Vorrichtung nicht möglich wäre. Des Weiteren können durch die Führung Oberflächen von Werkstücken funktionalisiert werden, beispielsweise um abriebharte oder hochschmelzende Oberflächen von Materialien zu schaffen. Die Führung ermöglicht insbesondere, dass auch Werkstoffe mit dem erfindungsgemäßen Verfahren bearbeitet werden können, die für das Schweißverfahren nicht selbst angetrieben werden. Auch andere Werkstücke als z.B. Rohre auf einer Drehbank können daher durch das erfindungsgemäße Verfahren bearbeitet werden. Bevorzugt ist die Führung eine CNC-Führung oder ein Roboterarm.

Gemäß einer weiteren bevorzugten Ausführungsform wird das pulverförmige oder drahtförmige Material zum Bilden einander überlagernder Materialschichten schichtweise auf das Werkstück aufgetragen. Beispielsweise kann das Verfahren daher den ersten Schritt des Auftragsschweißens auf einer ersten Stelle des Werkstücks und den zweiten Schritt des abermaligen Auftragsschweißens auf derselben Stelle des Werkstücks umfassen. Dies bewirkt, dass komplexe, mehrschichtige Strukturen und Formen auf das Werkstück aufgetragen werden können. Die Formgebung kann hierbei durch das wiederholte Abzeilen des Volumens und Hinzufügen von Material erfolgen, wobei es sich um ein additives Verfahren zur Herstellung eines Arbeitsstücks handelt. Insbesondere ist keine mechanische Formgebung nach dem Auftragen notwendig, um eine gewünschte Form herzustellen.

Mit der vorgenannten Ausführungsform kann somit einerseits ein Arbeitsstück hergestellt werden, welches von dem Substrat lösbar und eigenständig verwendet werden kann, beispielsweise ein anschraubbares Gelenk. Anderseits kann das Arbeitsstück auf dem Werkstück verbleiben, um dort eine Funktion zu erfüllen, beispielsweise als Gelenkpfanne, welche auf einem Metallprofil aufgetragen ist.

Gemäß einer weiteren bevorzugten Ausführungsform weist die Düse innere Kanäle zur Aufnahme von Kühlflüssigkeit und die Elektrode an ihrer Halterung Mittel zum Kühlen auf. Somit ist der Vorteil erhalten, dass durch die Kühlung der Vorrichtung einerseits die Lebensdauer der Vorrichtung erhöht wird und andererseits eine durch Überhitzung der Vorrichtung verursachte Beschädigung der Vorrichtung sowie eine daraus resultierende kostenintensive Unterbrechung des Arbeitsvorgangs vermieden wird.

Bevorzugt beträgt der Öffnungsdurchmesser der Elektrode maximal 1 cm, besonders bevorzugt im Wesentlichen maximal 300 µm. Weiters bevorzugt kann die Elektrode an ihrem dem Werkstück zugewandten Ende bevorzugt verjüngt sein. Dadurch kann ein Lichtbogen leichter gezündet werden.

Gemäß einer weiteren bevorzugten Ausführungsform werden die Lichtbogenleistung sowie die Mischverhältnisse und/oder die Strömungsgeschwindigkeiten der genannten Gase angepasst, um die Präzision sowie die Geschwindigkeit des Auftragens des pulverförmigen oder drahtförmigen Materials auf das Werkstück anzupassen.

Erfindungsgemäß wird das pulverförmige oder drahtförmige Material im genannten Lichtbogen abgeschmolzen. Bevorzugt erstreckt sich der Lichtbogen unmittelbar zwischen der Elektrode und dem Werkstück ohne Überschlag in das pulverförmige oder drahtförmige Material, was durch das Einstellen einer geeigneten Lichtbogenleistung und eines geeigneten Vorschubs des pulverförmigen oder drahtförmigen Materials erzielt werden kann. Die Wahl dieser Parameter kann durch den Fachmann vorgenommen werden, wobei üblicherweise die Lichtbogenleistung hoch und der Vorschub gering gewählt wird. Alternativ kann der Lichtbogen kurzzeitig in das Material überschlagen, d.h. es ergibt sich ein erster Überschlag zwischen Elektrode und Material und ein zweiter Überschlag zwischen Material und Werkstück, wobei das Schmelzen des Materials üblicherweise im zweiten Überschlag erfolgt. Um diese Variante zu erzielen, kann der Fachmann abermals Lichtbogenleistung und Vorschub wählen, wobei die Lichtbogenleistung gegenüber der vorstehenden Variante gering und der Vorschub hoch gewählt wird. Es sei jedoch darauf hingewiesen, dass die letztgenannte Variante nicht mit dem MIG-Schweißen zu verwechseln ist, bei welcher ein Stromfluss durch eine Elektrode ohne Lichtbogen in den Draht vorliegt und der Lichtbogen nur zwischen Draht und Werkstück verläuft.

In einer weiteren bevorzugten Ausführungsform endet die Elektrode in Zuführrichtung des pulverförmigen oder drahtförmigen Materials vor dem Materialzuführungskanal oder an derselben Stelle wie der Materialzuführungskanal. Die erstgenannte Alternative wird beispielsweise durch eine Elektrode erzielt, die eine Bohrung mit Innenbeschichtung aufweist und an ihrem Ende verjüngt ist. Dadurch verlängert sich der Materialzuführungskanal gegenüber der Elektrode in Richtung der Zuführrichtung des Materials, was den Überschlag des Lichtbogens von der Elektrode unmittelbar auf das Werkstück bzw. die Düse begünstigt. Die zweitgenannte Alternative kann beispielsweise dadurch erzielt werden, dass die Elektrode eine Bohrung ohne Innenbeschichtung aufweist. Unabhängig davon, ob die Kathode an ihrem Ende verjüngt ist oder nicht, wird die Elektrode in Zuführrichtung des Materials an derselben Stelle wie der Materialzuführungskanal enden.

Eine besonders vorteilhafte Anwendung des genannten Verfahrens zum Auftragsschweißen ergibt sich, wenn das Werkstück beim Auftragsschweißen über der Vorrichtung angeordnet ist. Bei dieser Verwendung kann das geschmolzene Material durch den eingeschnürten Lichtbogen entgegen der Schwerkraft zum Werkstück verbracht werden, ohne dass das geschmolzene Material nach unten tropft.

Vorteilhafte und nicht einschränkende Ausführungsformen der Erfindung werden nachfolgend anhand der Zeichnungen näher erläutert.
Figur 1 zeigt eine Ausführungsform des erfindungsgemäßen Verfahrens in einer schematischen Querschnittsansicht.
Figur 2 zeigt schematisch eine Vergrößerung der in Figur 1 dargestellten Elektrode in einer Querschnittsansicht.

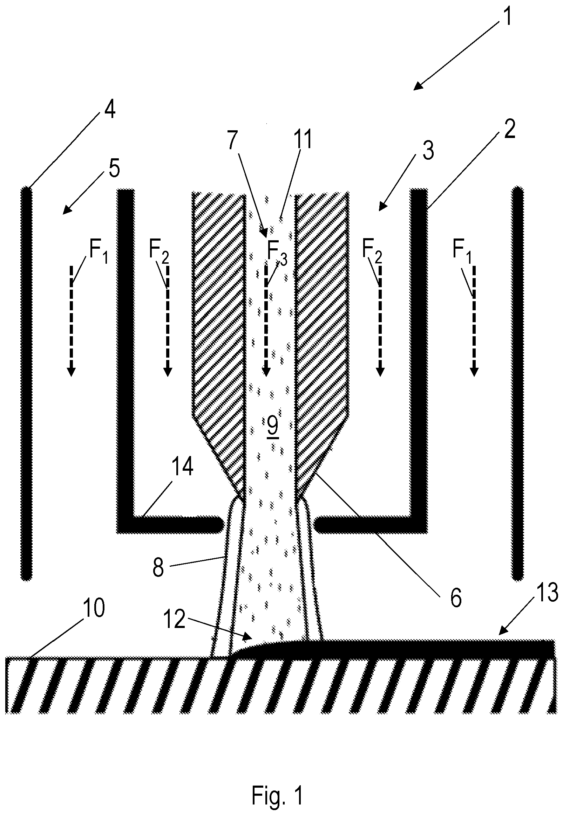

Figur 1 zeigt eine Vorrichtung 1 zum Auftragsschweißen von pulverförmigem oder drahtförmigem Material 11 auf ein Werkstück 10. Die Vorrichtung 1 umfasst eine im Wesentlichen stabförmige, beispielsweise in einer Halterung aufgenommene Elektrode 6, wobei die Elektrode 6 zumindest einen in ihrem Inneren verlaufenden Materialzuführungskanal 9 zum Zuführen des pulverförmigen oder drahtförmigen Materials 11 in einen Lichtbogen 8 aufweist. Bevorzugt ist das Werkstück 10 ein ebenes Substrat und insbesondere kein Rohr, da dessen Krümmung die Präzision des Verfahrens beeinträchtigt.

Im Folgenden wird das Verfahren zum Auftragsschweißen näher erläutert. Bei dem Verfahren können bis zu drei unterschiedliche Arbeitsgase 3, 5, 7 bzw. entsprechende Arbeitsgasströme eingesetzt werden, wobei ein erstes Arbeitsgas als "Arbeitsgas 3", ein zweites Arbeitsgas als "weiteres Arbeitsgas 5" und ein drittes Arbeitsgas als "zusätzliches Arbeitsgas 7" bezeichnet wird. Die Arbeitsgase 3, 5, 7 können eine unterschiedliche oder gleiche Zusammensetzung aufweisen, wie unten näher erläutert. Insbesondere können alle Arbeitsgase 3, 5, 7 Schutzgase oder Aktivgase sein.

Zur Durchführung des Verfahrens wird, wie in Figur 1 dargestellt, eine Elektrode 6 aus hochtemperaturbeständigem Material, beispielsweise aus Wolfram, bevorzugt zur Verwendung von Inertgas oder beispielsweise aus Hafnium bevorzugt zur Verwendung von Aktivgas eingesetzt. Diese Elektrode 6 weist dort, wo der Lichtbogen 10 ansetzt, den Ausgang eines Kanals 9 auf, wobei der Kanal 9 an seinem dem Werkstück 10 abgewandten Ende mit einem Strom eines zusätzlichen Arbeitsgases 7, welches mit einem pulverförmigen oder drahtförmigen Material 11 versetzt ist, versorgt werden kann.

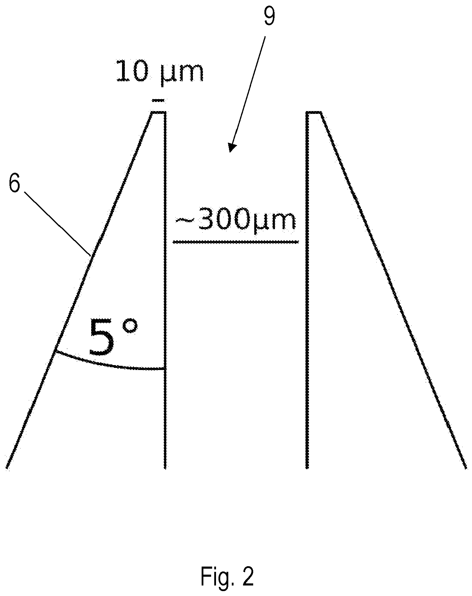

Dieser Kanal 9 kann zum Beispiel bei einer Hafnium-Elektrode, welche als Scheibe in ein Weichmetall eingepresst vorliegt, als zentrale Bohrung durch den Hafnium-Einsatz vorliegen. Bei einer Wolframelektrode hingegen wird üblicherweise ein Anspitzen der Elektrode 6 durchgeführt. Um eine zylindrische Elektrode axial anzuspitzen, kann die Elektrode 6 in eine Drehbank eingespannt werden und mit einer eingespannten Schleifmaschine auf den gewünschten Spitzwinkel angeschliffen werden. Mit Wolframelektroden hat sich ein Anspitzwinkel von 10° als ausreichend spitz erwiesen, wie auch Figur 2 entnommen werden kann. Beim Anspitzen kann ein Rand zwischen Kanal und Außendurchmesser von ca. 10 µm verbleiben, um Toleranzen beim Einspannen zuzulassen.

Elektroden 6 können auch bereits mit dem Kanal 9 gefertigt werden, beispielsweise beim Sintern mit einem axialen Hindernis in der Kavität. Bereits gefertigte Wolframelektroden können auch mithilfe des Elektrodenerosionsverfahrens bearbeitet werden, um den axialen Kanal 9 axial durch die Elektrode 6 zu fertigen. Beim Elektrodenerodieren lässt sich ein Drift des Senkerosionsdrahtes nicht vermeiden, was zu einem gebogenen Kanal 9 führt. In der Praxis hat sich diese Biegung bei Elektroden kürzer als 6 cm allerdings nicht als hinderlich erwiesen.

Der Kanal 9 wird, wie weiter oben bereits erwähnt, an seinem der zu bearbeitenden Oberfläche abgewandten Ende mit pulverförmigem oder drahtförmigem Material 11 versorgt. Beispielsweise kann zum Zuführen des Materials 11 das zusätzliche Arbeitsgas 7, welches in einer Flussrichtung F₃ des zusätzlichen Arbeitsgases 7 fließt, eingeblasen werden, welches mit aufzutragendem pulverförmigen Material 11 versetzt wurde.

Da die Elektrode 6 auch von außen mit einem Arbeitsgas 3 gespült werden kann, welches in einer Flussrichtung F₂ des Arbeitsgases 3 fließt, beispielsweise mit Argon, kann es für einige Anwendungen vorteilhaft sein, dasselbe Gas zu verwenden, um eine homogene Gasmischung um die Elektrode 6 aufrecht zu erhalten, sodass auch ein homogenes Plasma im Lichtbogen 8 bestehen bleibt. Spezialanwendungen können allerdings von getrennten Gasflüssen profitieren, zum Beispiel um aus CO₂ und H₂ freien Kohlenstoff zu formen, welcher in flüssiges Metall zum Härten eingebracht werden könnte.

Eine andere Möglichkeit, Material einzubringen besteht darin, pulverförmiges Material 11 durch den Kanal 9 rieseln zu lassen, wobei diese Art der Einbringung als gravitative Förderung bezeichnet wird. Die Pulverförderung erfolgt dafür bevorzugt unter kontrollierter Atmosphäre, um Zufuhr von Verunreinigungen oder Luft zum Lichtbogen zu Vermeiden.

Eine weitere Möglichkeit, Material 11 einzubringen besteht darin, Material in Draht- oder Stab-Form durch den Kanal 9 zu schieben. Kommt leitender Draht zum Einsatz, wird der Kanal 9 vorzugsweise gegen den Draht isoliert, um Stromfluss durch den Draht zu vermeiden. Dazu kann der Kanal 9 innen mit Keramiken bedampft werden oder ein dünnes Keramik-Röhrchen in den Kanal 9 eingesetzt werden. Zu beachten ist, dass die Elektrode 6 Wärme leitet und der Keramik-Einsatz daher vergleichbar hitzebeständig wie die Elektrode 6 sein muss. Die Lichtbogenleistung wird üblicherweise derart eingestellt, dass der Draht bereits auf Höhe der Elektrodenöffnung, bevorzugt spätestens aber zwischen Elektrode und Düse, schmilzt.

Die Breite der aufgetragenen Schweißspur ist abhängig von der Breite des Kanals 9 in der Elektrode 6. Je schmaler der Kanal 9 beim Ansatz des Lichtbogens ist, umso schmaler kann pulverförmiges oder drahtförmiges Material 11 aufgetragen werden. Die Pulverkörnung kann derart gewählt werden, dass der Durchmesser der Pulverkörner den halben Durchmesser des Kanals 9 in der Elektrode 6 nicht überschreitet.

Um die Position des Lichtbogens 8 zu kontrollieren und dessen Wandern zu verhindern, umfasst die Vorrichtung eine die Elektrode 6 umgebende Düse 2 sowie einen Arbeitsgasbereich, welcher zwischen der Elektrode 6 und der Düse 2 ausgebildet ist. Durch die Düse 2 bzw. den Arbeitsgasbereich kann ein Arbeitsgas 3 mit hohem Gasfluss am Ende der Elektrode 6 durch den Ansatz des Lichtbogens 8 gedrückt werden, um den Lichtbogen 8 zu formen. Hierbei spricht man von einem eingeschnürten Lichtbogen, das dazugehörige Verfahren wird als Plasmaschweißen bezeichnet. Die Elektrode 6 kann axial hinter der Öffnung einer Düse 2, d.h. auf der dem Werkstück abgewandten Seite der Düse, platziert werden.

Beim Plasmaschweißen werden höhere Lichtbogen-Temperaturen möglich, indem die Wärmeleistung an der Elektrode 6 minimiert und stattdessen im Verlauf des Lichtbogens 8 freigesetzt wird. Das Einschnüren des Lichtbogens 8 erlaubt außerdem, den Verlauf des Lichtbogens 8 zu stabilisieren. Während ein freier Lichtbogen immer eine gewisse zufällige Bewegung über das Werkstück 10 aufweist, kann der stehende Lichtbogen durch die Gasströmung fixiert werden, was höhere Präzision erlaubt. Die Düse 2 weist hierbei einen größeren Durchmesser als die Elektrode 6 auf. Um den Pulverstrom zentriert zu halten, kann der Gasdruck der Strömung durch die Elektrode 6 dem Gasdruck der lichtbogenformenden Gasströmung angepasst werden.

Das Verfahren kann in einer mit einem weiteren Arbeitsgas 5 gefüllten Kammer durchgeführt werden, oder die Vorrichtung 1 kann einen weiteren Arbeitsgasbereich aufweisen, wobei das weitere Arbeitsgas 5 in einer Flussrichtung F₁ des weiteren Arbeitsgases 5 fließt, sodass in beiden Fällen eine kontrollierte Atmosphäre auf einer Auftragsstelle 12 des Werkstücks 10 erzeugt wird. Der weitere Arbeitsgasbereich kann zwischen der Düse 2 und einer die Düse 2 umgebenden Atmosphärenschutzummantelung 4 ausgebildet sein.

Aufzutragendes Material wird durch den Kanal 9 durch die Elektrode 6 dem Lichtbogen 8 in Pulverform oder als Draht zugeführt. Jedes Material, das bei den Temperaturen im Lichtbogen 8 nicht denaturiert, kann prinzipiell verarbeitet werden. Bei Materialien, die bei den Temperaturen im Lichtbogen 8 verdampfen, kann aber der plötzliche Anstieg des Volumens beim Verdampfen des pulverförmigen oder drahtförmigen Materials 11 zu Turbulenzen führen und der Gasstrom umgelenkt werden, was zum Anwachsen von Pulverrückständen an der Elektrode 6 oder an der Düse 2 beiträgt. Das Verfahren ist daher geeignet für Materialien, die im Plasma zwar schmelzen, nicht aber verdampfen. Beispielsweise ist Stahlpulver zum Verbindungsschweißen geeignet, aber auch die Verarbeitung von Keramiken und Karbiden in Pulverform zum Oberflächenveredeln ist möglich.

Die Temperatur des Lichtbogens 8 kann durch die Lichtbogenleistung kontrolliert werden. Weiters kann bei kontrollierter Atmosphäre die Gaszusammensetzung so gewählt werden, dass der Spannungsabfall im Lichtbogen 8 den gewünschten Leistungen besser entspricht. Dieser Spannungsabfall kann dem Minimum des Paschen-Gesetz entnommen werden.

Höhere Leistungen ermöglichen einen höheren Materialfluss, wobei höhere elektrische Ströme den Lichtbogen 8 ausweiten, da die Stromdichte im Plasma konstant bleibt. Um die Präzision bei höheren Leistungen aufrecht zu erhalten ist die Auswahl eines geeigneten Gases erforderlich, welches einen höheren Spannungsabfall aufweist, zum Beispiel Stickstoff oder Wasserstoff statt Argon.

Das Verfahren wird angewendet, indem die aktive Elektrode 6 mit eingeschnürtem Lichtbogen 8 über das Werkstück 10 bewegt wird, während pulverförmiges oder drahtförmiges Material 11 axial zugeführt wird. Hierbei ist insbesondere die Bewegungsgeschwindigkeit der Elektrode 6 über das Werkstück 10 zu berücksichtigen, um einen optimalen Auftragung von Material zu gewährleisten.

Wird die Bewegungsgeschwindigkeit zu gering gewählt, kann auf dem Werkstück 10 Material aufgeschichtet werden, bis es die Elektrode 6 erreicht und zu einem Fehler, bei leitendem Material beispielsweise zu einem Kurzschluss, führt. Wird die Bewegungsgeschwindigkeit dagegen zu hoch gewählt, kann kaum noch pulverförmiges oder drahtförmiges Material 11 deponiert werden und die Dicke einer Schicht 13 einer über das Werkstück 10 aufgetragenen Schicht 13 eines pulverförmig oder drahtförmig zugeführten Materials 11 wird inhomogen. Die optimale Bewegungsgeschwindigkeit hängt hierbei des Weiteren von der Fördermenge des pulverförmigen oder drahtförmigen Materials 11 ab.

Soll isolierendes Material aufgetragen werden, kann, insofern die Schicht 13 homogen ist und die Kapazität dieser Schicht 13 bekannt ist, der Lichtbogen 8 durch eine auf die Kapazität abgestimmte Wechselstromquelle aufrecht erhalten werden, um mehrere Schichten 13 übereinander aufzubringen. Je mehr Schichten 13 übereinander aufgebracht werden, umso kleiner wird also die Kapazität, weshalb umso höhere Frequenzen der Wechselstromquelle notwendig sind.

Wird hingegen leitendes Material, also Metall oder leitende Keramiken, aufgetragen, so können mehrere Schichten 13 übereinander gelagert werden, ohne eine auf die Kapazität abgestimmte Wechselstromquelle zu verwenden. Da das Verfahren eine vergleichsweise hohe Präzision erlaubt, können so Strukturen additiv gefertigt werden. In diesem additiven Fertigungsverfahren wird Material schrittweise an ausgewählten Stellen hinzugefügt, um eine dreidimensionale Struktur zu bilden.

Werden mehrere Schichten 13 übereinander gelegt, so wird der Strom des Lichtbogens 8 durch alle Schichten 13 geleitet. Diese Hitze-Last ist beim Design einer zu fertigenden Struktur zu beachten. Außerdem ist die Breite des Lichtbogens 8 durch den Strom gegeben und muss für höhere Präzision ebenfalls minimiert werden. Höhere Wärmeleistungen bei niedrigerem Strom sind wieder durch die geeignete Wahl des Plasmagases zu realisieren, zum Beispiel erlaubt Stickstoff einen Spannungsabfall von ca. 100 V im Gegensatz zu Argon, welches ca. 10 V Spannungsabfall am Lichtbogen 8 verursacht. Da der Zusammenhang zwischen einer Leistung P, einer Spannung U sowie eines Stromflusses I durch P=U*I gegeben ist, kann mit höherem Abfall der Spannung U dieselbe Leistung P bei niedrigerem Stromfluss I erreicht werden.

Zur Oberflächenveredelung können höhere Leistungen und größere Ströme eingesetzt werden. Auch können Elektroden 6 mit breiterem Durchmesser verwendet werden, um mehr Materialtransport zu erlauben. Um Materialien mit hohem Schmelzpunkt aufzutragen, wie etwa Refraktärmetalle, kann die Verweilzeit im Lichtbogen 8 erhöht werden, was durch Vergrößern des Abstandes zwischen Elektrode 6 und Werkstück 10 und damit Verlängern des Lichtbogens 8 erreicht werden kann.

Damit die Vorrichtung 1 zum Schweißen den Verlustleistungen des Lichtbogens 8 noch besser widerstehen kann, ist darüber hinaus aktive Kühlung einsetzbar. Da die Düse 2 im Allgemeinen geringere Temperaturen aushalten kann als die Elektrode 6, kann die Düse 2 mit inneren Kanälen für Kühlflüssigkeit versehen werden. Das Kühlen der Elektrode 6 kann über eine Kontaktkühlung der Elektrodenhalterung erfolgen. Diese besteht bevorzugt aus leitfähigem Metall, was sich auch gut für Wärmetransport eignet.

Zur Oberflächenveredelung ist des Weiteren die Geschwindigkeit der resultierenden Flüssigkeitströpfchen relevant. Die Geschwindigkeit der Tröpfchen kann durch die Strömungsgeschwindigkeit der Arbeitsgase 3, 7 geregelt werden. Dabei ist zu beachten, dass das Gas durch das rasche Erhitzen im Lichtbogen 8 seine Geschwindigkeit erhöht und zusätzliche Beschleunigung bietet.

Wird das aufzutragende Material in Stab- oder Drahtform zugeführt oder aber als Pulver gravitativ gefördert, muss das zusätzliche Arbeitsgas 7 nur minimal gefördert werden, um das Material beim Zuführen in den Lichtbogen vor Verunreinigungen und Luft zu schützen. Es kann aber auch ein Gasstrom mit einer hohen Strömungsgeschwindigkeit genutzt werden, um Pulver mit dem zusätzlichen Arbeitsgas 7 zu transportieren, was die Auftreff-Geschwindigkeit der Tröpfchen erhöht.

Sollte das Gas mit Schallgeschwindigkeit oder Überschallgeschwindigkeit aus der Elektrode 6 austreten, so ist zu beachten, dass es zu Expansionsschockwellen an der Kante der Elektrode 6 kommen kann, welche pulverförmiges oder drahtförmiges Material 11 mitreißen und damit einerseits weiter verteilen, andererseits aber aus dem Lichtbogen 8 hinaus reißen können. Dieses Verhalten ist zu vermeiden, wenn hohe Präzision erwünscht ist. Zur Vermeidung von Expansionsschockwellen können Umgebungsdruck und Strömungsgeschwindigkeit des umgebenden Arbeitsgases oder in einer Kammer kontrollierter Atmosphäre der Kammerdruck angepasst werden, sodass ein Prandtl-Meyer Winkel für die Strömungsbedingungen 0 lautet. Das kann durch eine geeignete Form der Elektrode 6, zum Beispiel einer Spitze in Form einer Aero-Spike-Düse, direkt beim Lichtbogen 8 erreicht werden.

In der Praxis konnte ein besonders präzises Auftragsschweißen erzielt werden, indem der Abstand der Elektrode 6 zum Werkstück 10 maximal 1,5mm betrug. Als bevorzugter Förderfluss des pulvertransportierenden zusätzlichen Arbeitsgases 7 hat sich ein Förderfluss von maximal 1000 SCCM erwiesen. Auch ergab sich, dass die Begrenzung des Lichtbogenstroms auf maximal 20 A ein besonders präzises Schweißverfahren ermöglichte.

## Patentansprüche

1. Verfahren zum Auftragsschweißen von pulverförmigem oder drahtförmigem Material (11) auf ein Werkstück (10), welches bevorzugt ein ebenes Substrat ist, mittels einer Vorrichtung (1), die eine im Wesentlichen stabförmige Elektrode (6) umfasst, wobei die Elektrode (6) zumindest einen in ihrem Inneren verlaufenden Materialzuführungskanal (9) zum Zuführen des pulverförmigen oder drahtförmigen Materials (11) in den Lichtbogen (8) aufweist,
**dadurch gekennzeichnet, dass**
die Vorrichtung eine die Elektrode (6) umgebende Düse (2) sowie einen Arbeitsgasbereich umfasst, welcher zwischen der Elektrode (6) und der Düse (2) ausgebildet ist,
wobei das Verfahren folgende Schritte umfasst:
- Ausbilden des Lichtbogens (8) als übertragener Lichtbogen (8) zwischen der Elektrode (6) und dem Werkstück (10) oder als freistehender Lichtbogen (8) zwischen der Elektrode (6) und der Düse (2),
- Durchfluten des Arbeitsgasbereichs mit einem Arbeitsgas (3), um den Lichtbogen (8) in Richtung des Werkstücks (10) einzuschnüren,
- Zuführen des pulverförmigen oder drahtförmigen Materials (11) in den eingeschnürten Lichtbogen (8), wobei das pulverförmige oder drahtförmige Material (11) im genannten Lichtbogen (8) abgeschmolzen wird, und
- Bewegen der Vorrichtung (1) über das Werkstück (10), während das pulverförmige oder drahtförmige Material in den eingeschnürten Lichtbogen zugeführt wird,
wobei ein radialer Abstand zwischen der Düse (2) und der Elektrode (6) nicht größer als 1 cm ist und/oder ein axialer Abstand zwischen dem dem Werkstück zugewandten Ende der Düse (2) und dem dem Werkstück (10) zugewandten Ende der Elektrode (6) nicht größer als 1 cm ist, wobei das dem Werkstück zugewandte Ende der Düse (2) bevorzugt einen geringeren Abstand zum Werkstück aufweist als das dem Werkstück (10) zugewandte Ende der Elektrode (6).

2. Verfahren nach Anspruch 1, **dadurch gekennzeichnet, dass** zwischen der Düse (2) und einer die Düse (2) umgebenden Atmosphärenschutzummantelung (4) ein weiterer Arbeitsgasbereich ausgebildet ist, welcher mit einem weiteren Arbeitsgas (5) durchflutet wird, sodass eine kontrollierte Atmosphäre auf einer Auftragsstelle (12) des Werkstücks (10) erzeugt wird, oder dass die Vorrichtung (1) in einer Kammer mit kontrollierter Atmosphäre verwendet wird.

3. Verfahren nach Anspruch 1 oder 2, **dadurch gekennzeichnet, dass** das Verfahren zum Verbindungsschweißen eingesetzt wird und dazu bevorzugt das pulverförmige oder drahtförmige Material (11) ein Metall ist, oder das Verfahren zum Oberflächenveredeln eingesetzt wird und dazu bevorzugt das pulverförmige oder drahtförmige Material (11) Keramik, Metall oder Karbid umfasst.

4. Verfahren nach einem der Ansprüche 1 bis 3, **dadurch gekennzeichnet, dass** das pulverförmige oder drahtförmige Material (11) in einem zusätzlichen Arbeitsgas (7) zugeführt wird, welches bevorzugt Argon, Helium, Kohlenstoffdioxid oder Stickstoff ist, wobei auch das Arbeitsgas (3) und/oder das weitere Arbeitsgas (5) bevorzugt Argon, Helium, Kohlenstoffdioxid oder Stickstoff sind/ist.

5. Verfahren nach einem der Ansprüche 1 bis 4, **dadurch gekennzeichnet, dass** der Abstand zwischen Elektrode (6) und Werkstück (10) und/oder eine Position der Elektrode (6) über dem Werkstück (10) durch eine mechanische Führung gesteuert wird.

6. Verfahren nach einem der Ansprüche 1 bis 5, **dadurch gekennzeichnet, dass** das pulverförmige oder drahtförmige Material (11) zum Bilden einander überlagernder Materialschichten (13) schichtweise auf das Werkstück (10) aufgetragen wird.

7. Verfahren nach einem der Ansprüche 1 bis 6, **dadurch gekennzeichnet, dass** die Düse (2) innere Kanäle zur Aufnahme von Kühlflüssigkeit aufweist und/oder die Elektrode (6) an ihrer Halterung Mittel zum Kühlen aufweist.

8. Verfahren nach einem der Ansprüche 1 bis 7, **dadurch gekennzeichnet, dass** der Öffnungsdurchmesser der Elektrode (6) maximal 1 cm, bevorzugt im Wesentlichen maximal 300 µm, beträgt und die Elektrode (6) an ihrem dem Werkstück zugewandten Ende bevorzugt verjüngt ist.

9. Verfahren nach einem der Ansprüche 1 bis 8, **dadurch gekennzeichnet, dass** die Lichtbogenleistung sowie die Mischverhältnisse und/oder die Strömungsgeschwindigkeiten der genannten Gase (5,3,7) angepasst werden, um die Präzision sowie die Geschwindigkeit des Auftragens des pulverförmigen oder drahtförmigen Materials (11) auf das Werkstück (10) anzupassen.

10. Verfahren nach einem der Ansprüche 1 bis 9, **dadurch gekennzeichnet, dass** die Elektrode (6) in Zuführrichtung des pulverförmigen oder drahtförmigen Materials (11) vor dem Materialzuführungskanal (9) endet oder an derselben Stelle wie der Materialzuführungskanal (9) endet.

11. Verfahren nach einem der Ansprüche 1 bis 10, **dadurch gekennzeichnet, dass** das Werkstück (10) beim Auftragsschweißen über der Vorrichtung (1) angeordnet ist.

## Claims

1. Method for weld cladding of powdery or wire-like material (11) onto a workpiece (10), which is preferably a flat substrate, by means of a device (1) which comprises a substantially rod-shaped electrode (6), the electrode (6) having at least one material feed channel (9) running in its interior for feeding the powdery or wire-like material (11) into the arc (8),
**characterised in that**
the device comprises a nozzle (2) surrounding the electrode (6) and a working gas region which is formed between the electrode (6) and the nozzle (2),
wherein the method comprises the following steps:
- forming the arc (8) as a transferred arc (8) between the electrode (6) and the workpiece (10) or as a free-standing arc (8) between the electrode (6) and the nozzle (2),
- flooding the working gas region with a working gas (3) to constrict the arc (8) in the direction of the workpiece (10),
- feeding the powdery or wire-like material (11) into the constricted arc (8), wherein the powdery or wire-like material (11) is melted in said arc (8), and
- moving the device (1) over the workpiece (10) while the powdery or wire-like material is fed into the constricted arc,
wherein a radial distance between the nozzle (2) and the electrode (6) is not greater than 1 cm and/or an axial distance between the end of the nozzle (2) facing the workpiece and the end of the electrode (6) facing the workpiece (10) is not greater than 1 cm, wherein the end of the nozzle (2) facing the workpiece preferably has a smaller distance to the workpiece than the end of the electrode (6) facing the workpiece (10).

2. The method according to claim 1, **characterised in that** a further working gas region is formed between the nozzle (2) and a protective atmosphere sheathing (4) surrounding the nozzle (2), which is flooded with a further working gas (5) so that a controlled atmosphere is generated on an application point (12) of the workpiece (10), or so that the device (1) is used in a chamber with a controlled atmosphere.

3. The method according to claim 1 or 2, **characterised in that** the method is used for fusion welding and for this purpose the powdery or wire-like material (11) is preferably a metal, or the method is used for surface finishing and for this purpose the powdery or wire-like material (11) preferably comprises ceramic, metal or carbide.

4. The method according to one of claims 1 to 3, **characterised in that** the powdery or wire-like material (11) is fed in an additional working gas (7), which is preferably argon, helium, carbon dioxide or nitrogen, wherein the working gas (3) and/or the further working gas (5) is/are also preferably argon, helium, carbon dioxide or nitrogen.

5. The method according to one of claims 1 to 4, **characterised in that** the distance between the electrode (6) and the workpiece (10) and/or a position of the electrode (6) above the workpiece (10) is controlled by a mechanical guide.

6. The method according to one of claims 1 to 5, **characterised in that** the powdery or wire-like material (11) is applied to the workpiece (10) in layers to form superimposed layers of material (13).

7. The method according to one of claims 1 to 6, **characterised in that** the nozzle (2) has internal channels for receiving cooling liquid and/or the electrode (6) has means for cooling on its holder.

8. The method according to one of claims 1 to 7, **characterised in that** the opening diameter of the electrode (6) is at most 1 cm, preferably essentially at most 300 µm, and the electrode (6) is preferably tapered at its end facing the workpiece.

9. The method according to one of claims 1 to 8, **characterised in that** the arc power and the mixing ratios and/or the flow rates of said gases (5, 3, 7) are adjusted in order to adjust the precision and the speed of application of the powdery or wire-like material (11) to the workpiece (10).

10. The method according to one of claims 1 to 9, **characterised in that** the electrode (6) ends before the material feed channel (9) in the feed direction of the powdery or wire-like material (11) or ends at the same point as the material feed channel (9).

11. The method according to one of claims 1 to 10, **characterised in that** the workpiece (10) is arranged above the device (1) during weld cladding.

## Revendications

1. Procédé de rechargement par soudage de matériau sous forme de poudre ou de fil (11) sur une pièce (10), laquelle est de préférence un support plat, au moyen d'un dispositif (1) qui comporte essentiellement une électrode en forme de tige (6), laquelle électrode (6) présente au moins un canal de transport de matériau (9) courant à l'intérieur pour transporter le matériau sous forme de poudre ou de fil (11) dans l'arc électrique (8),
**caractérisé en ce que**
le dispositif comporte une buse (2) entourant l'électrode (6) ainsi qu'une zone de gaz de traitement qui est située entre l'électrode (6) et la buse (2),
lequel procédé comporte les étapes suivantes :
- formation de l'arc électrique (8) sous la forme d'arc électrique transféré (8) entre l'électrode (6) et la pièce (10) ou sous la forme d'arc électrique libre (8) entre l'électrode (6) et la buse (2),
- traversée de la zone de gaz de traitement par un gaz de traitement (3) pour rétrécir l'arc électrique (8) en direction de la pièce (10),
- guidage du matériau sous forme de poudre ou de fil (11) dans l'arc électrique (8) rétréci, le matériau sous forme de poudre ou de fil (11) fondant dans ledit arc électrique (8) et
- déplacement du dispositif (1) sur la pièce (10) pendant que le matériau sous forme de poudre ou de fil est guidé dans l'arc électrique rétréci,
une distance radiale entre la buse (2) et l'électrode (6) n'excédant pas 1 cm et/ou une distance axiale entre l'extrémité de la buse (2) orientée vers la pièce et l'extrémité de l'électrode orientée vers la pièce n'excédant pas 1 cm, l'extrémité de la buse (2) orientée vers la pièce présentant de préférence une distance inférieure par rapport à la pièce que l'extrémité de l'électrode (6) orientée vers la pièce.

2. Procédé selon la revendication 1, **caractérisé en ce qu'**entre la buse (2) et une gaine de protection atmosphérique (4) entourant la buse (2) est formée une autre zone de gaz de traitement qui est traversée par un autre gaz de traitement (5), de sorte qu'une atmosphère contrôlée est produite sur un point d'application (12) de la pièce (10), ou que le dispositif (1) est utilisé dans une chambre à atmosphère contrôlée.

3. Procédé selon la revendication 1 ou 2, **caractérisé en ce que** ce procédé est utilisé pour le soudage d'assemblage et que, pour cela, le matériau sous forme de poudre ou de fil (11) est de préférence un métal, ou que ce procédé est utilisé pour le traitement de surface et que, pour cela, le matériau sous forme de poudre ou de fil (11) contient de la céramique, du métal ou du carbure.

4. Procédé selon une des revendications 1 à 3, **caractérisé en ce que** le matériau sous forme de poudre ou de fil (11) est transporté dans un gaz de traitement supplémentaire (7) qui est de préférence de l'argon, de l'hélium, du dioxyde de carbone ou de l'azote, le gaz de traitement (3) et/ou l'autre gaz de traitement (5) étant également de préférence de l'argon, de l'hélium, du dioxyde de carbone ou de l'azote.

5. Procédé selon une des revendications 1 à 4, **caractérisé en ce que** la distance entre l'électrode (6) et la pièce (10) et/ou une position de l'électrode au-dessus de la pièce (10) étant contrôlées par un guide mécanique.

6. Procédé selon une des revendications 1 à 5, **caractérisé en ce que** le matériau sous forme de poudre ou de fil (11) est déposé par couches sur la pièce (10) pour former des couches de matériau superposées (13).

7. Procédé selon une des revendications 1 à 6, **caractérisé en ce que** la buse (2) présente des canaux intérieurs destinés à recevoir du liquide de refroidissement et/ou que l'électrode (6) comporte des moyens de refroidissement au niveau de sa fixation.

8. Procédé selon une des revendications 1 à 7, **caractérisé en ce que** le diamètre d'ouverture de l'électrode (6) est de 1 cm maximum, de préférence d'environ 300 µm maximum, et que l'électrode est de préférence effilée à son extrémité orientée vers la pièce.

9. Procédé selon une des revendications 1 à 8, **caractérisé en ce que** la puissance de l'arc électrique ainsi que les rapports de mélange et/ou les vitesses d'écoulement des gaz susmentionnés (5, 3, 7) sont adaptés pour adapter la précision ainsi que la vitesse d'application du matériau sous forme de poudre ou de fil (1) sur la pièce (10).

10. Procédé selon une des revendications 1 à 9, **caractérisé en ce que** l'électrode (6) dans la direction de transport du matériau sous forme de poudre ou de fil (11) se termine avant le canal de transport de matériau (9) ou au même endroit que le canal de transport de matériau (9).

11. Procédé selon une des revendications 1 à 10, **caractérisé en ce que** la pièce (10) est disposée au-dessus du dispositif (1) lors du rechargement par soudage.
